# FASCICULE DE BREVET EUROPEEN

(11) **EP 0 646 516 B1**
(45) Date de publication et mention de la délivrance du brevet: **21.01.1998**
(21) Numéro de dépôt: 94115123.5
(22) Date de dépôt: 26.09.1994
(51) Int. Cl.: B62D 29/00, B62D 21/07, B62D 21/15

(54) **Châssis pour véhicule, notamment pour véhicule automobile**
Fahrzeugrahmen, insbesondere für Kraftfahrzeuge
Vehicle frame, especially for motor vehicles

(30) Priorité: 05.10.1993 FR 9311940
(43) Date de publication de la demande: 05.04.1995
(73) Titulaire: SMH Management Services AG, CH-2501 Biel (CH)
(72) Inventeur: Stoll, Daniel, CH-2000 Neuchâtel (CH); Müller, Jacques, CH-2732 Reconvilier (CH)
(74) Mandataire: Patry, Didier Marcel Pierre

(56) Documents cités:
- EP-A- 0 217 522
- EP-A- 0 494 116
- EP-A- 0 547 583
- US-A- 2 192 075
- US-A- 4 573 707
- PATENT ABSTRACTS OF JAPAN vol. 4, no. 139 (M-34) (621) 30 Septembre 1980 & JP-A-55 094 863 (MIKIO KOUYA) 18 Juillet 1980

## Description

L'invention concerne un châssis pour véhicule, notamment pour véhicule automobile, et plus particulièrement un châssis en une seule pièce ayant une configuration telle qu'il peut être obtenu par extrusion selon l'axe de lacet du véhicule.

Au début de l'automobile, les véhicules comprenaient un châssis constitué de deux longerons reliés au moyen de deux traverses et d'un croisillon central soudés. Les longerons s'étendaient au delà des traverses afin de former un brancard avant et arrière.

Ce type de châssis présente de nombreux inconvénients dus en particulier à sa grande masse qui nécessite une énergie importante pour sa mise en mouvement et à sa grande rigidité qui rend le véhicule dangereux en cas de collision.

Ces inconvénients ont conduit ultérieurement au développement d'un nouveau type de véhicule dans lequel le châssis et la carrosserie sont confondus. Cet ensemble châssis-carrosserie, encore utilisé aujourd'hui, est appelé monocoque ou coque autoporteuse, et comprend un châssis-cadre constitué d'un certain nombre d'éléments en tôle emboutie et soudés et d'une superstructure constituée de la même façon et assemblée soit de façon rigide soit de façon élastique sur le châssis-cadre. Bien que ce type de châssis offre un bon compromis entre la légèreté et la rigidité lui conférant des caractéristiques de sécurité intéressantes, il présente toutefois un grand nombre de pièces qui doivent être assemblées au cours de nombreuses opérations qui, même si elles sont réalisées par des robots, rendent les coûts de fabrication du châssis-cadre élevés. C'est pourquoi des recherches constantes sont menées pour mettre à la disposition du public des châssis de véhicules automobiles simples et ayant des caractéristiques de sécurité accrues.
Concernant la simplicité on peut par exemple citer les documents US 4 573 707 et EP 0 217 522. Le premier décrit un chassis pour véhicule léger, formé d'une structure monobloc en matériau plastique moulé et renforcé de fibres à la périphérie. Le second propose un châssis formé à partir d'une structure régulière en nid d'abeille, obturée de part et d'autre par deux plaques collées. Concernant l'accroissement de la securité, on retiendra par exemple le document JP 55-94863 qui propose de fixer à l'avant et à l'arrière d'un véhicule des absorbeurs de choc essentiellement constitués par des caissons contenant une tôle ondulée. Chacune de ces constructions ne réunit pas des deux objectifs recherchés et nécessite encore des opérations d'assemblage.

L'invention a donc pour but principal de remédier aux inconvénients de l'art antérieur susmentionné en fournissant un châssis pour véhicule, de structure telle qu'il peut être réalisé en une seule pièce et en un nombre réduit d'opérations tout en offrant des caractéristiques de sécurité et de légéreté compatibles avec les exigences actuelles du marché et en n'ayant pas un prix de revient prohibitif.

A cet effet, l'invention a pour objet un châssis pour véhicule, notamment pour véhicule automobile constitué en une seule pièce ayant une structure alvéolaire selon l'axe de lacet dudit châssis, comprenant un cadre de base comportant deux montants qui s'étendent sensiblement parallèlement à l'axe de roulis du châssis et qui sont reliés l'un à l'autre par une traverse avant et une traverse arrière, et deux paires de longerons parallèles avant et arrière associées audit cadre et qui s'étendent sensiblement parallèlement à l'axe de roulis du châssis caractérisé en ce que les longerons comprennent des zones d'absorption avant et arrière avec une structure alvéolaire progressivement déformable en cas de chocs pour éviter une déformation du cadre.

Ainsi, le châssis peut être réalisé de façon économique sans opération d'assemblage telle que des opérations de soudage ou de boulonnage. Par ailleurs, la structure alvéolaire du châssis permet de conférer aisément à ses différentes parties les caractéristiques mécaniques souhaitées. En particulier, il est aisé, d'une part, de renforcer le cadre de base pour le rendre indéformable en cas de chocs et lui conférer la rigidité en torsion et en flexion nécessaire et, d'autre part, de rendre la zone d'absorption progressivement déformable en cas de chocs pour absorber l'énergie produite par ces derniers.

Selon une caractéristique de l'invention, le châssis est constitué d'une matière extrudée selon l'axe de lacet du châssis.

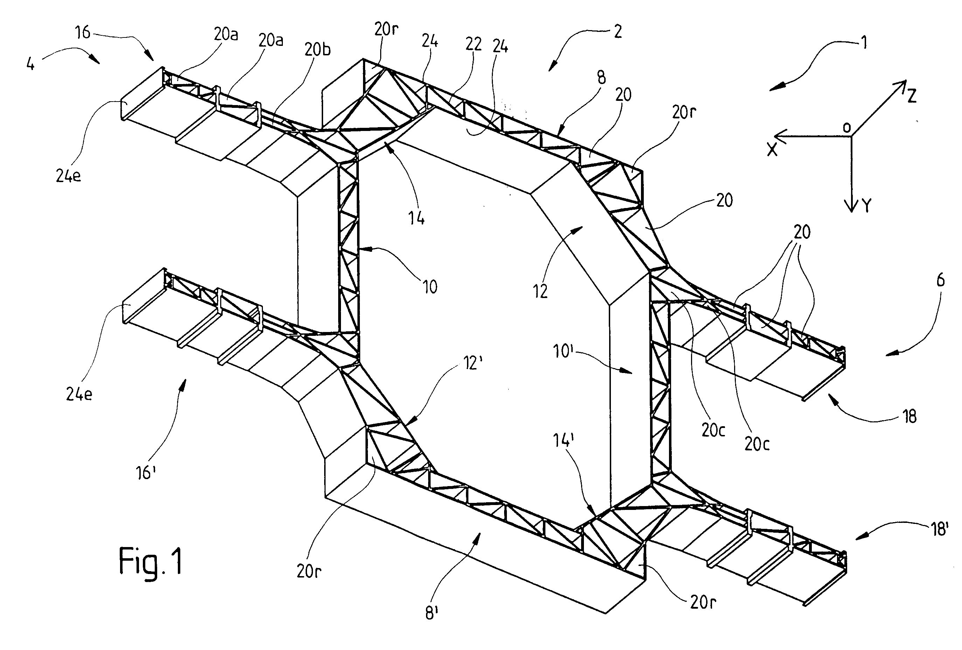

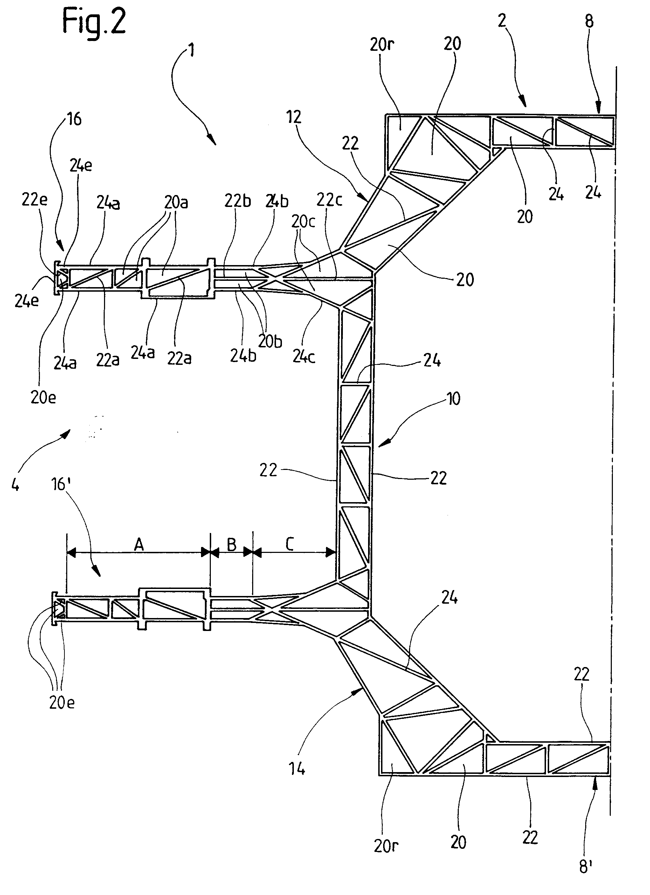

D'autres avantages et caractéristiques de l'invention apparaîtront plus clairement à la lecture de la description détaillée d'un mode d'exécution de l'invention exposée ci-après à titre purement illustratif et non limitatif en liaison avec les figures 1 et 2 représentant respectivement une vue en perspective et une demie vue en plan du châssis selon l'invention.

Sur la figure 1, on peut voir un châssis selon l'invention, désigné par la référence numérique générale 1 et destiné, dans l'exemple illustré, à équiper un véhicule automobile.

Le châssis 1 comporte un cadre de base 2 indéformable et deux zones d'absorption 4, 6 respectivement avant et arrière qui s'étendent sensiblement parallèlement à l'axe longitudinal 0X du châssis ou axe de roulis. Le cadre de base 2 est destiné à supporter l'habitacle (non représenté) du véhicule automobile et à délimiter dans un plan parallèle à la surface la chaussée une cellule indéformable à l'intérieur de laquelle se trouvent les occupants du véhicule. Les deux zones d'absorption 4 et 6 sont quant à elles destinées, d'une part, à supporter des éléments fonctionnels du véhicule et, d'autre part, à absorber l'énergie par déformation des organes qui les constituent en cas de chocs pour assurer la sécurité des occupants du véhicule.

Par définition on désignera dans la suite de la description par axe de tangage, l'axe transversal 0Y du châssis et par axe de lacet l'axe 0Z perpendiculaire aux axes longitudinal OX et transversal OY.

Dans l'exemple décrit, le cadre de base 2 présente une forme générale octogonale et comprend huit montants 8, 8', 10, 10', 12, 12', et 14, 14' parallèles deux à deux et s'étendant dans un même plan. Les montants 8, 8' s'étendent parallèlement à l'axe de roulis, les montants 10, 10' s'étendent parallèlement à l'axe de tangage et les montants 12, 12' et 14, 14' s'étendent sensiblement à 45 ° par rapport à l'axe de roulis ou de tangage.

Les zones d'absorption 4 et 6 comprennent chacune deux longerons 16, 16' et 18, 18' parallèles deux à deux qui s'étendent parallèlement aux montants 8, 8' du cadre 2 à partir de la jonction des montants 10 et 10' avec les montants 14, 12' respectivement 12 , 14'.

Selon l'invention, le cadre de base 2 et les zones d'absorption 4 et 6 formant le châssis 1 présentent une structure comprenant une pluralité d'alvéoles désignées par une référence générale 20. Cette structure de châssis alvéolaire vient d'une seule pièce par extrusion selon l'axe de lacet OZ du châssis et à travers une filière dont la forme est complémentaire à celle du châssis.

Les alvéoles 20 formant les montants du cadre 2 sont délimitées par des parois extérieures 22 et intérieures 24 qui sont disposées géométriquement de manière que la rigidité en torsion et la rigidité en flexion du châssis 1 par rapport à l'axe de roulis OX et par rapport à l'axe de tangage OY soient élevées, notamment pour conférer au véhicule que ce châssis 1 est destiné à équiper des caractéristiques de conduites sûres et confortables.

Quant aux parois 22 et 24 des alvéoles formant les longerons 16, 16',18, 18', elles sont arrangées de manière que les longerons présentent une déformabilité décroissante au fur et à mesure que l'on se rapproche du cadre de base 2.

En se référant particulièrement à la figure 2 on voit par exemple que l'on peut diviser un longeron 16 en trois zones A, B , C présentant des alvéoles 20 de formes et de dimensions différentes conférant aux zones du longeron les caractéristiques mécaniques particulières recherchées pour chacune de ces zones.

Plus précisément, la zone A comprend une succession de paires d'alvéoles 20a ayant chacune une section en forme de triangle rectangle. L'hypoténuse de ces triangles forme une paroi intérieure 22a commune aux alvéoles de chaque paire et leur grand côté, qui s étend sensiblement parallèlement à l'axe de roulis du châssis, forme les parois extérieures 24a des alvéoles de chaque paire. La configuration des alvéoles 20a de la zone A leur permet, en cas de choc, de se déformer avec une résistance à la déformation allant en croissant lorsque l'on se rapproche du cadre 2 et, par conséquent, permet d'absorber une quantité maximum de l'énergie engendrée par le choc.

La zone B comprend au moins deux alvéoles 20b, de forme générale trapézoïdale, qui sont juxtaposées. Ces alvéoles 20b présentent une paroi commune 22b qui s'étend sensiblement parallèlement à l'axe de roulis et deux autres parois extérieures 24b également parallèles à cet axe. La géométrie des alvéoles de la zone B est destinée notamment à conférer à cette zone une grande rigidité en flexion par rapport à l'axe de tangage.

La zone C comprend des alvéoles 20c, de forme généralement triangulaire, dont les parois extérieures 24c s'étendent dans le prologement des parois extérieures 24b en s évasant progressivement en direction du cadre 2. Les deux alvéoles 20c les plus proches du cadre comprennent une paroi intérieure 22c commune qui s étend sensiblement parallèlement à l'axe de roulis et dans le prolongement de la paroi intérieure 22b des alvéoles 20b de la zone B. Cette configuration de la zone de liaison C permet d'assurer, le cas échéant, une répartition satisfaisante dans le cadre des contraintes subies par les longerons 2.

On notera également que chaque longeron 16, 16', 18, 18' comprend en outre, à son extrémité libre, des alvéoles 20 séparées notamment par une ou plusieurs parois intérieures 22e dont la position est telle qu'elles tendent à écarter les parois extérieures 24e du longeron lorsque celui-ci reçoit un choc dont la direction est parallèle à l'axe de roulis. Ainsi, on favorise une déformation générale du longeron en cas de choc si bien que l'énergie du choc peut être favorablement dissipée. Dans l'exemple décrit, trois alvéoles 20e sont séparées par une paroi intérieure 22e sensiblement en forme de V dont la pointe est dirigée vers le cadre 2 et deux parois extérieures 24e parallèles à l'axe de roulis et deux autres parois parallèles respectivement intérieure et extérieure d'extrémité 24e perpendiculaire à l'axe de roulis. On remarquera à ce propos que la paroi extérieure 24e d'extrémité peut servir avantageusement de zone de fixation d'un pare-choc (non représenté).

Plus généralement, on remarque qu'en agissant à la fois sur la longueur des différentes parois intérieures et extérieure et/ou sur les angles que forment ces parois avec l'axe de roulis, on peut aisément faire varier les caractéristiques mécaniques du châssis et donc atteindre les caractéristiques mécaniques souhaitées.

Selon une autre caractéristique de l'invention, la structure du cadre 2 est également renforcée par la disposition spécifique des parois intérieures et extérieures des alvéoles 20 des montants 12, 12', 14, 14'. En particulier, les montants 12, 12', 14, 14' sont orientés avec un angle, de 45° dans l'exemple décrit, par rapport à l'axe de roulis du châssis afin de permettre une transmission efficace des efforts provenant des longerons 16, 16', 18, 18' aux montants 8, 8'.

Avantageusement, le châssis 1 comporte en outre des moyens de réception et/ou de fixation d'éléments fonctionnels de véhicule venus de matière avec le cadre 2 et les longerons 16, 16,' 18, et 18'.

En particulier, le cadre 2 comprend quatre alvéoles 20r réparties aux quatre extrémités des montants 8, 8'. Les alvéoles 20r sont respectivement destinées à la fixation, notament par encastrement, des arceaux de sécurité (non représentés) permettant d'éviter l'écrasement de l'habitacle en cas de retournement du véhicule. En outre, les longerons 16, 16', 18, 18' comprennent chacun à l'extrémité de la zone A la plus proche du cadre 2 une paire d'alvéoles 20a spécifiquement renforcées pour la fixation de la suspension et des roues du véhicule.

Le châssis 1 présente de préférence une hauteur d'au moins 150 mm. L'espace vide à l'intérieur du cadre de base 2 indéformable peut par exemple, après montage des planchers, être avantageusement utilisé pour le stockage de batteries dans le cas de véhicules automobiles électriques.

Il est à noter qu'un châssis de ce type, dans lequel les extrémités des longerons 16 et 18 sont reliées respectivement aux extrémités des longerons 16' et 18' par des traverses (non représentées), est conforme à l'invention.

Le châssis 1 est de préférence en alliage d'aluminium. Ces alliages d'aluminium se prêtent bien à l'extrusion et permettent d'atteindre un compromis intéressant entre la rigidité et la légèreté du châssis.

Dans l'exemple qui vient d'être décrit, les alvéoles présentent une section triangulaire ou quadrilatérale, mais il est bien entendu que d'autres formes de section peuvent être prévues par l'homme de l'art.

En pratique, les châssis de l'invention peuvent être obtenu par découpage de tranches, dans un plan perpendiculaire à l'axe d'extrusion, d'un profilé extrudé ayant le contour intérieur et extérieur du châssis représenté aux figures.

## Revendications

1. Châssis (1) pour véhicule, notamment pour véhicule automobile, comprenant :
- un cadre de base (2) comportant deux montants (8,8') qui s'étendent sensiblement parallèlement à l'axe de roulis (OX) du châssis et qui sont reliés l'un à l'autre par une traverse (10,12',14) avant et une traverse (10',12,14') arrière, et
- deux paires de longerons (16,16';18,18') parallèles avant et arrière associées audit cadre (2) et qui s'étendent sensiblement parallèlement à l'axe de roulis (OX) du châssis, caractérise en ce que le châssis (1) est constitué en une seule pièce ayant une structure en alvéoles (20) selon l'axe de lacet (OZ) dudit châssis, et en ce que les longerons (16, 16'; 18, 18') comprennent des zones d'absorption (4,6) avant et arrière, avec une structure alvéolaire progressivement déformable en cas de chocs pour éviter une déformation du cadre (2).

2. Châssis pour véhicule selon la revendication 1, caractérisé en ce que les alvéoles (20) formant le cadre de base (2) et les longerons (16, 16', 18, 18') sont orientées pour présenter des caractéristiques de rigidité élevée en torsion et en flexion par rapport à l'axe de roulis (OX) et à l'axe de tangage (OY) du châssis (1).

3. Châssis pour véhicule selon les revendications 1 ou 2, caractérisé en ce que les alvéoles (20) présentent une section triangulaire ou quadrilatérale.

4. Châssis pour véhicule selon l'une des revendications 1 à 3, caractérisé en ce que le cadre de base (2) présente une forme générale octogonale.

5. Châssis pour véhicule selon l'une des revendications 1 à 4, caractérisé en ce que les parois (22, 24) des alvéoles (20) des longerons (16, 16', 18, 18') sont arrangées de manière que lesdits longerons présentent une déformabilité décroissante en se rapprochant du cadre de base (2).

6. Châssis pour véhicule selon l'une des revendications 1 à 4, caractérisé en ce que chaque zone de liaison (C) d'un longeron (16, 16', 18, 18') avec le cadre de base (2) comprend au mois deux alvéoles (20c) ayant une paroi commune (22c) qui s'étend sensiblement parallèlement à l'axe de roulis (OX) du châssis et des parois (24c) s'évasent en direction du cadre de base (2).

7. Châssis pour véhicule selon l'une des revendications 1 à 6, caractérisé en ce que certaines des alvéoles (20c) formant le châssis comportent des organes récepteurs d'éléments fonctionnels.

8. Châssis selon l'une des revendications précédentes, caractérisé en ce qu'il est réalisé par extrusion d'un alliage d'aluminium selon l'axe de lacet (OZ) dudit châssis.

## Claims

1. Chassis (1) for vehicle, notably for motor vehicle, including :
- a rigid base frame (2) comprising two beams (8, 8') which extend substantially parallel to the rolling axis (OX) of said chassis and which are linked together by a front beam (10, 12', 14) and a rear beam (10', 12, 14'), and
- two pairs of parallel front and rear side members (16, 16', 18, 18') associated with said frame (2) and which extend substantially parallel to the rolling axis (OX) of the chassis, characterized in that the chassis (1) has a cell-like unitary structure (20) along the yaw axis (OZ) of said chassis and in that the side members (16, 16', 18, 18') comprise front and rear absorption zones (4, 6), with a cell-like structure progressively able to be deformed in the case of shocks to avoid the rigid base frame (2) to be deformed.

2. Chassis for vehicle according to claim 1, characterized in that the cells (20) forming the base frame (2) and the side members (16, 16', 18, 18') are oriented to exhibit high torsion and flexion rigidity characteristics in relation to the rolling axis (OX) and the pitching axis (OY) of the chassis (1).

3. Chassis for vehicle according to claims 1 or 2, characterized in that the cells (20) have a triangular or quadrilateral section.

4. Chassis for vehicle according to one of claims 1 to 3, characterized in that the base frame (2) has a general octagonal form.

5. Chassis for vehicle according to one of claims 1 to 4, characterized in that the walls (22, 24) of the cells (20) of the side members (16, 16', 18, 18') are arranged in such a way that said side members exhibit a ability to be deformed which decreases the closer they are to the base frame (2).

6. Chassis for vehicle according to one of claims 1 to 4, characterized in that each connecting zone (C) of a side member (16, 16', 18, 18') with the base frame (2) comprises at least two cells (20c) having a common wall (22c) which extends substantially parallel to the rolling axis (OX) of the chassis and the walls (24c) open out towards the base frame (2).

7. Chassis for vehicle according to one of claims 1 to 6, characterized in that certain of the cells (20c) forming the chassis comprise organs for receiving functional elements.

8. Chassis according to any of the preceding claims, characterized in that it is made of an aluminium alloy extruded along the yaw axis (OZ) of said chassis.

## Patentansprüche

1. Chassis (1) für ein Fahrzeug, insbesondere für ein Kraftfahrzeug, umfassend:
- einen Basisrahmen (2) mit zwei Holmen (8, 8'), die sich im wesentlichen parallel zur Rollachse (OX) des Chassis erstrecken und die miteinander durch eine vordere Traverse (10, 12', 14) und eine hintere Traverse (10', 12, 14') verbunden sind, und
- zwei Paare von parallelen vorderen bzw. hinteren Längsträgern (16, 16', 18, 18'), die dem Rahmen (2) zugeordnet sind und sich im wesentlichen parallel zur Rollachse (OX) des Chassis erstrecken, dadurch gekennzeichnet, daß das Chassis (1) einstückig mit einer Wabenstruktur (20) in Richtung der Gierachse (OZ) des Chassis ausgebildet ist und daß die Längsträger (16, 16', 18, 18') vordere bzw. hintere Absorptionszonen (4, 6) mit einer zunehmend deformierbaren Wabenstruktur im Falle von Stößen umfassen, um eine Deformation des Rahmens (2) zu vermeiden.

2. Chassis nach Anspruch 1, dadurch gekennzeichnet, daß die den Basisrahmen (2) und die Längsträger (16, 16', 18, 18') bildenden Waben (20) orientiert sind, um erhöhte Festigkeitskennwerte gegen Torsion und Biegung relativ zur Rollachse (OX) und Nickachse (OY) des Chassis (1) aufzuweisen.

3. Chassis nach Anspruch 1 oder 2, dadurch gekennzeichnet, daß die Waben (20) einen Dreieckquerschnitt oder vierseitigen Querschnitt aufweisen.

4. Chassis nach einem der Ansprüche 1 bis 3, dadurch gekennzeichnet, daß der Basisrahmen (2) eine generell oktogonale Form aufweist.

5. Chassis nach einem der Ansprüche 1 bis 4, dadurch gekennzeichnet, daß die Wandungen (22, 24) der Waben (20) der Längsträger (16, 16', 18, 18') derart angeordnet sind, daß die Längsträger eine abnehmende Deformierbarkeit bei Annäherung an den Basisrahmen (2) aufweisen.

6. Chassis nach einem der Ansprüche 1 bis 4, dadurch gekennzeichnet, daß jede Verbindungszone (C) eines Längsträgers (16, 16', 18, 18') mit dem Basisrahmen (2) mindestens zwei Waben ( 20c) umfaßt, die eine gemeinsame Wandung (22c) besitzen, welche sich im wesentlichen parallel zur Rollachse (OX) des Chassis erstreckt, und Wandungen (24c), die sich in Richtung des Basisrahmens (2) aufweiten.

7. Chassis nach einem der Ansprüche 1 bis 6, dadurch gekennzeichnet, daß bestimmte Waben (20c), welche das Chassis bilden, Aufnahmeorgane von Funktionselementen umfassen.

8. Chassis nach einem der vorangehenden Ansprüche, dadurch gekennzeichnet, daß es durch Extrusion einer Alumiumlegierung in Richtung der Gierachse (OZ) des Chassis hergestellt ist.
